# EUROPÄISCHE PATENTSCHRIFT

(11) **EP 0 852 512 B1**
(45) Veröffentlichungstag und Bekanntmachung des Hinweises auf die Patenterteilung: **10.03.1999**
(21) Anmeldenummer: 96937164.0
(22) Anmeldetag: 22.08.1996
(51) Int. Cl.: B01D 53/94, F01N 3/20

(54) **VERFAHREN UND EINRICHTUNG ZUM ABBAU VON STICKOXIDEN IN EINEM ABGAS EINES VERBRENNUNGSMOTORS**
METHOD AND DEVICE FOR DECOMPOSING OXIDES OF NITROGEN IN THE EXHAUST GASES FROM AN INTERNAL-COMBUSTION ENGINE
PROCEDE ET DISPOSITIF POUR LA DECOMPOSITION DES OXYDES D'AZOTE CONTENUS DANS LES GAZ D'ECHAPPEMENT D'UN MOTEUR A COMBUSTION INTERNE

(30) Priorität: 23.08.1995 DE 19531028
(43) Veröffentlichungstag der Anmeldung: 15.07.1998
(73) Patentinhaber: SIEMENS AKTIENGESELLSCHAFT, 80333 München (DE)
(72) Erfinder: MATHES, Wieland, D-96247 Michelau (DE); HOFMANN, Lothar, D-96224 Burgkunstadt (DE); SCHÖPPE, Detlev, D-93173 Wenzenbach (DE); ACHLEITNER, Erwin, D-93051 Regensburg (DE); TOST, Rainer, D-90427 Nürnberg (DE)
(86) Internationale Anmeldenummer: DE9601558
(87) Internationale Veröffentlichungsnummer: WO9707876

(56) Entgegenhaltungen:
- EP-A- 0 381 236
- EP-A- 0 555 746
- EP-A- 0 586 913
- DE-C- 3 821 832
- PATENT ABSTRACTS OF JAPAN vol. 14, no. 501 (M-1043), 2.November 1990 & JP 02 207119 A (SHIKO ELECTRIC CO. LTD.), 16.August 1990,
- PATENT ABSTRACTS OF JAPAN vol. 8, no. 138 (C-231), 27.Juni 1984 & JP 59 049824 A (BABCOCK HITACHI KK), 22.März 1984,

## Beschreibung

Die Erfindung bezieht sich auf ein Verfahren zum Abbau von Stickoxiden in einem Abgas eines Verbrennungsmotors, bei dem das Abgas sowie ein darin mittels Druckluft versprühtes Reaktionsmittel einem Katalysator zugeführt werden. Außerdem bezieht sich die Erfindung auf eine Einrichtung zum Abbau von Stickoxiden in einem Abgas eines Verbrennungsmotors, mit einem Katalysator, dem das Abgas sowie ein mittels Druckluft in dem Abgas zu versprühendes Reduktionsmittel zuführbar sind sowie einer Sprüheinrichtung zum Versprühen des Reduktionsmittels.

Zur Verminderung der im Abgas eines Verbrennungsmotors enthaltenen Schadstoffe, im besonderen der Stickoxide, hat sich das Prinzip des geregelten oder gesteuerten Dieselkatalysators (GDK) als vorteilhaft erwiesen. Dieses Prinzip wird vor allem bei Verbrennungsmotoren, die mit Luftüberschuß betrieben werden, wie z. B. bei Diesel- und Magermotoren, eingesetzt. Dieses im wesentlichen auf dem Verfahren der selektiven katalytischen Reduktion (SCR) beruhende Prinzip ist mittlerweile aus zahlreichen Veröffentlichungen, z. B. aus der DE-A-43 10 926, der DE-A-43 15 278 und der EP-B-0 617 199, bekannt. Beim SCR-Verfahren werden die Stickoxide zusammen mit Ammoniak an einen selektiven Katalysator kontaktiert und dort zu Stickstoff und Wasser umgesetzt.

Aufgrund der mit dem Einsatz von Ammoniak verbundenen Probleme, nämlich der Giftigkeit und der möglichen Geruchsbelästigung, soll Ammoniak als solches bei einem mit GDK-System ausgestatteten Verbrennungsmotor nicht im Fahrzeug mitgeführt werden. Das zur katalytischen Umsetzung der Stickoxide erforderliche Reaktionsmittel wird daher in Form einer wäßrigen Lösung von Harnstoff oder dergleichen im Fahrzeug mittransportiert. Aus dieser wäßrigen Lösung wird das Ammoniak durch Hydrolyse jeweils in der zur Umsetzung der angefallenen Stickoxide benötigten Menge erzeugt. Bei einer stationären Rauchgas-Reinigungsanlage, z. B. im Abgasstrang eines Kraftwerks, kann reines Ammoniak oder Ammoniak-Wasser verwendet werden.

Gemäß der DE-A-44 17 238 ist vorgesehen, die Abgasleitung eines LKW-Dieselmotors direkt seitlich an eine zylindrische Einlaufkammer heranzuführen, in der ein zu einem Trichter geformtes Lochblech angeordnet ist. An der engsten Stelle des Trichters ist ein Eindüsventil vorgesehen, über das eine wäßrige Harnstofflösung in den inneren Raum des Trichters eingedüst wird. Auf diese Weise wird eine homogene Verteilung der Harnstofflösung im Abgas über den gesamten Querschnitt der Einlaufkammer erzielt. An die Einlaufkammer schließen sich ein Hydrolysekatalysator, ein DeNOₓ-Katalysator und gegebenenfalls ein Oxidationskatalysator an.

Hiervon unterscheidet sich eine Lösung, die in der EP-A-0 586 913 beschrieben ist. Um eine ausreichende Vernebelung des zu zerstäubenden Mediums, d.h. einer wäßrigen Lösung von Harnstoff, vor dem Einbringen in den mit Schadstoffen belasteten Abgasstrom zu erhalten, ist eine Mischeinrichtung oder Vormischkammer vorgesehen. In diese Vormischkammer werden das Medium und ein Druckgas wie Luft zur innigen Vermischung miteinander, d.h. zur Bildung einer Dispersion, eingeleitet. Die Vormischkammer ist über eine Misch- oder Rohrleitung mit einer Zerstäuberdüse verbunden, welche ihrerseits im Abgasstrom angeordnet ist. Mit dieser Vormischung und dem Einsprühen gelingt es, die wäßrige Lösung recht gut in dem Abgasstrom zu verteilen. Die Verwendung der Druckluft bewirkt dabei auch eine Kühlung der im heißen Abgasstrom befindlichen Zerstäuberdüse.

Die für das Verdüsen und Einsprühen erforderliche Druckluft wird üblicherweise in einem speziellen Verdichter erzeugt, der besonders bereitgestellt werden muß. Dies verursacht Kosten.

In der DE-C-3821832 und in der JP-A-59049824 werden weiterhin Verfahren zum Abbau von Stickoxiden beschrieben. In den Verfahren von diesen Dokumenten wird jedoch kein Katalysator verwendet. Außerdem wird auch in diesen Verfahren ein spezieller Verdichter für die zum Verdüsen und Einsprühen des Reaktionsmittels erforderliche Druckluft verwendet.

Aufgabe der Erfindung ist daher, ein Verfahren und eine Abgas-Reinigungseinrichtung der eingangs genannten Art anzugeben, die ohne einen speziellen Verdichter für die Eindüsung der Druckluft auskommen.

Bezüglich eines Verfahrens wird die Aufgabe erfindungsgemäß gelöst durch ein Verfahren zum Abbau von Stickoxiden in einem Abgas eines Verbrennungsmotors, bei dem das Abgas sowie ein darin mittels Druckluft versprühtes Reaktionsmittel einem Katalysator zugeführt werden, und bei dem der Verbrennungsmotor mit von einem Verdichter verdichteter Luft beaufschlagt und ein Teil der verdichteten Luft vor dem Eingang in den Verbrennungsmotor abgezweigt und als Druckluft zur Verdüsung des Reaktionsmittels verwendet wird.

Man kann dies auch so ausdrücken: Das Verfahren zeichnet sich dadurch aus, daß bei einem aufgeladenen Verbrennungsmotor die zum Verdüsen des Reduktionsmittels erforderliche Druckluft aus der verdichteten Luft, die dem Verbrennungsmotor zugeführt wird, abgezweigt wird. Dabei kann es sich um eine Aufladung mittels eines mechanisch, z.B. über Getriebe, Keilriemen oder eine andere Art angetriebenen, beliebig gestalteten Laders handeln.

Vorzugsweise wird der Verdichter von einer mit dem Abgas beaufschlagten Turbine angetrieben, wobei der Verdichter und die Turbine insbesondere einen Abgasturbolader bilden.

Als ebenfalls bevorzugte Alternative zur soeben bezeichneten Ausgestaltung wird der Verdichter von dem Verbrennungsmotor direkt angetrieben, ist also der Verdichter ein 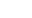 Kompressor" im Sinne des herkömmlichen Sprachgebrauchs in der Automobiltechnik.

Das Reaktionsmittel wird vorzugsweise in dem Abgas homogen verteilt, bevor das Abgas den Katalysator erreicht; auf diese Weise kann eine vollständige Umsetzung des Reaktionsmittels mit den in dem Abgas enthaltenen Stickoxiden erreicht und eine Abgabe des Reaktionsmittels oder daraus entstandener Abbauprodukte in die Umgebung vermieden werden.

Ebenfalls vorzugsweise enthält das Reaktionsmittel einen Stoff, welcher nach Einmischung in das Abgas unter Bildung von Ammoniak zersetzt wird, wobei das Ammoniak an dem Katalysator mit den Stickoxiden zur Reaktion gebracht wird. Ein solcher Stoff ist beispielsweise Harnstoff. Harnstoff ist, anders als Ammoniak, weder giftig noch sonstwie unangenehm und kann ohne weiteres, insbesondere ohne besondere Sicherheitsmaßnahmen, in Form einer wäßrigen Lösung in einem Kraftfahrzeug mitgeführt werden.

Bezüglich einer Einrichtung wird die Aufgabe erfindungsgemäß gelöst durch eine Einrichtung zum Abbau von Stickoxiden in einem Abgas eines Verbrennungsmotors, mit einem Katalysator, dem das Abgas sowie ein mittels Druckluft in dem Abgas zu versprühendes Reaktionsmittel zufuhrbar sind, sowie einer Sprüheinrichtung zum Versprühen des Reaktionsmittels in das Abgas, wobei
a)dem Verbrennungsmotor ein Verdichter zur Erzeugung und Zuleitung verdichteter Luft zugeordnet ist, wobei zwischen dem Verdichter und dem Verbrennungsmotor ein Abzweig liegt, über welchen ein Teil der verdichteten Luft abzweigbar ist, und
b)der Abzweig mit der Sprüheinrichtung verbunden ist, so daß der abgezweigte Teil der verdichteten Luft als Druckluft zum Versprühen des Reaktionsmittels dienen kann.

Wesentliche Vorzüge dieser Einrichtung erschließen sich aus den Ausführungen zum erfindungsgemäßen Verfahren und der nachfolgenden Beschreibung bevorzugter Ausführungsbeispiele, worauf hier verwiesen wird.

Vorzugsweise ist der Abzweig in einer von dem Verdichter zu dem Verbrennungsmotor führenden Verdichterleitung direkt am Verbrennungsmotor gelegen.

Der Verdichter gehört insbesondere zu einem Abgasturbolader, welcher zusätzlich zu dem Verdichter eine mit dem Abgas des Verbrennungsmotors beaufschlagende Turbine enthält, oder der Verdichter ist über einen mechanischen Antrieb mit dem Verbrennungsmotor verbunden.

Außerdem vorzugsweise ist zwischen dem Verdichter und dem Verbrennungsmotor ein Ladeluftkühler zur Kühlung der verdichteten Luft vorgesehen, und der Abzweig ist zwischen dem Ladeluftkühler und dem Verbrennungsmotor angeordnet. Dadurch wird zum Versprühen des Reaktionsmittels Luft bereitgestellt, welche in dem Ladeluftkühler eine Kühlung erfahren hat. Damit kann insbesondere vermieden werden, daß es in der Sprüheinrichtung oder sogar vor der Sprüheinrichtung zu einer unerwünschten Zersetzung des Reaktionsmittels kommen kann. Dies ist von besonderer Bedeutung dann, wenn als Reaktionsmittel Harnstoff eingesetzt wird.

Der Katalysator in der Einrichtung ist vorzugsweise ausgebildet zur selektiven Katalyse einer Reaktion zwischen Stickoxiden und einem Reduktionsmittel, insbesondere Ammoniak, wobei das Reduktionsmittel entweder das vorstehend vielfach erwähnte Reaktionsmittel selbst oder ein Abbauprodukt dieses Reaktionsmittels ist.

Ausführungsbeispiele der Erfindung werden im folgenden anhand zweier Figuren näher beschrieben. Für gleiche Bauteile werden dieselben Bezugszeichen verwendet.

Es zeigen:
- FIG 1: eine Abgas-Reingungseinrichtung in Verbindung mit einem Verbrennungsmotor mit einem Abgasturbolader;
- FIG 2: eine Abgas-Reinigungseinrichtung in Verbindung mit einem Verbrennungsmotor mit einem mechanischen Lader; und
- FIG 3: eine Abgas-Reinigungseinrichtung in Verbindung mit einem Verbrennungsmotor mit einem Abgasturbolader und einem Ladedruckregler.

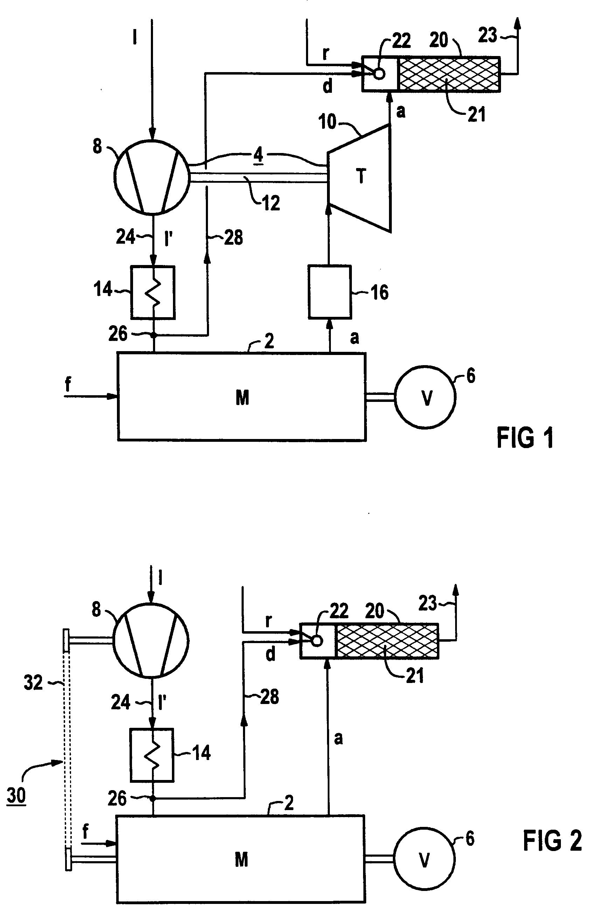

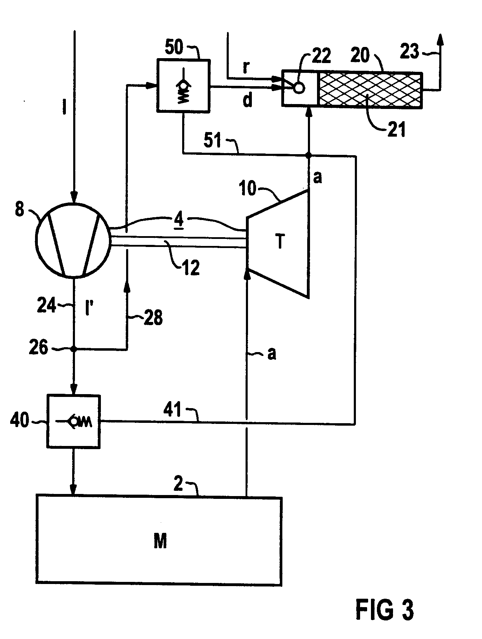

Nach Figur 1 und Figur 3, die in vielen Merkmalen mit Figur 1 übereinstimmt, ist ein Verbrennungsmotor 2, z.B. ein Dieselmotor, mit einem Abgasturbolader 4 vorgesehen. Der Verbrennungsmotor 2, der von einem Brennstoff f gespeist wird, treibt einen Verbraucher 6, beispielsweise ein Kraftfahrzeug oder eine ortsfeste Maschine, an. Der Abgasturbolader 4 umfaßt einen Verdichter 8 und eine Turbine 10, die mittels einer Welle 12 miteinander verbunden sind. Der Verbrennungsmotor 2 besitzt einen Eintrittsbehalter 14, der insbesondere als Ladeluftkühler ausgebildet sein kann, und einen Austrittsbehälter 16. Eine Abgas-Reinigungseinrichtung 20, die einen (nicht im einzelnen gezeigten) SCR-Katalysator 21 und eine Sprüheinrichtung 22 enthält, dient zur Reinigung des Abgases a, das im Betrieb vom Verbrennungsmotor 2 abgegeben wird (DeNOₓ-Reinigung).

Die vom Verdichter 8 im Betrieb angesogene Luft l wird als verdichtete Luft l' abgegeben und über den Eintrittsbehälter 14 dem Verbrennungsmotor 2 zugeführt. Das dort entstehende Abgas a gelangt über den Austrittsbehälter 16 in die Turbine 10, die zum Antrieb des Verdichters 8 dient. Das von der Turbine 10 abgegebene Abgas a wird zwecks DeNOₓ-Reinigung nach dem SCR-Verfahren der Abgas-Reinigungseinrichtung 20 zugeleitet. Dieser wird neben dem zu reinigenden Abgas a auch ein mittels Druckluft d in der Sprüheinrichtung 22 versprühtes oder verdüstes Reaktionsmittel r, insbesondere vorliegend wäßriger Harnstoff, zugeführt. Das gereinigte Abgas a wird über einen Auslaß 23, z. B. einen Auspuff, entlassen.

Von Bedeutung ist, daß vorliegend ein Teil der im ohnehin vorhandenen Verdichter 8 verdichteten Luft l' in der Verdichterleitung 24, und zwar am Ausgang des Eintrittsbehälters 14, mittels eines Abzweigs 26 abgezweigt, über eine Leitung 28 als Druckluft d der Sprüheinrichtung 22 zugeleitet und somit zur Verdüsung des Reaktionsmittels r verwendet wird. Ein spezieller Verdichter für die Verdüsung des Reaktionsmittels r ist daher entbehrlich. Der Abzweig 26 ist hier unmittelbar am Eingang der Verdichterleitung 24 am Verbrennungsmotor 2 gelegen.

Im Ausführungsbeispiel gemaß Figur 2 ist anstelle des Abgasturboladers 4 ein mechanischer Lader 30 vorgesehen. Dieser umfaßt neben dem Verdichter 8 eine Übertragung oder ein Getriebe 32, womit vom Motor 2 abgegebene Energie zum Antrieb des Verdichters 8 herangezogen wird. Der weitere Antrieb ist weitgehend identisch zu dem von Figur 1, so daß auf eine erneute Schilderung verzichtet werden kann. Auch hier ist ein Abzweig 26 zwischen dem Verdichter 8, und zwar hinter dem Ladeluftkühler 14, und dem aufgeladenen Verbrennungsmotor 2 vorgesehen. Wiederum wird über den Abzweig 26 ein Teil der vom Verdichter 8 verdichteten Luft l' abgezweigt. Auch hier ist der Abzweig 26 über die Leitung 28 mit der Sprüheinrichtung 22 derart verbunden, daß der abgezweigte Teil der verdichteten Luft l' als Druckluft d zur Verdüsung des Reaktionsmittels r dient. Auch hier wird ein spezieller Verdichter nicht benötigt; vielmehr wird auf den für die Aufladung benötigten und ohnehin vorhandenen Verdichter 8 zurückgegriffen.

Das Ausführungsbeispiel gemäß Figur 3 umfaßt ebenfalls einen Verbrennungsmotor 2, der über einen Abgasturbolader 4 mit einem Verdichter 8 und einer Turbine 10 mit komprimierter Luft l' aufgeladen wird und dessen Abgas a ebenfalls hinter der Turbine 10 in eine Abgas-Reinigungseinrichtung 20 gelangt. Dabei entsprechen Aufbau und Funktionsweise weitgehend dem Ausführungsbeispiel gemaß Figur 1; die Ausführungen zu Figur 1 sind soweit sinngemäß auf Figur 3 anwendbar. Als Besonderheit zeigt Figur 3 einen in die Verdichterleitung 24 eingefügten Ladedruckregler 40, welcher benutzt wird zur Begrenzung des Drucks, mit welchem die verdichtete Luft l' die Verbrennungsmotor 2 beaufschlagt. Die Verwendung eines solchen Ladedruckreglers 40 ist weit verbreitet für Verbrennungsmotoren 2 in Kraftfahrzeugen, insbesondere solche Verbrennungsmotoren 2, welche mit vielfach wechselnden Lasten betrieben werden müssen. Im einfachsten Falle besteht der Ladedruckregler 40 aus einem federbelasteten Ventil, wie auch in Figur 3 angedeutet, und ist versehen mit einer Abblasleitung 41, durch welche überschüssige Luft dem Abgas a hinter der Turbine 10 zugeführt wird. Um für die Sprüheinrichtung 22 in Abgas-Reinigungseinrichtung 20 Druckluft mit einem möglichst hohen Druck verfügbar zu haben, ist der Abzweig 26 zwischen dem Verdichter 8 und dem Ladedruckregler 40 vorgesehen. Für den der Sprüheinrichtung 22 zuzuführenden Teil der verdichteten Luft bleibt somit der Ladedruckregler 40 wirkungslos, und mithin steht der abgezweigte Teil der verdichteten Luft im wesentlichen unter demjenigen Druck, mit dem er von dem Verdichter 8 geliefert wird. Die Verwendung eines Ladedruckreglers 40 ist im übrigen nicht beschränkt auf die Verwendung im Zusammenhang mit einem Abgasturbolader 4; ein Ladedruckregler 40 kommt selbstverständlich auch in Frage im Zusammenhang mit einem direkt vom Verbrennungsmotor 2 angetriebenen Verdichter 8, wie erkennbar aus Figur 2.

Als zusätzliche Besonderheit gezeigt ist in Figur 3 ein Druckregler 50 in der Leitung 28, die von dem Abzweig 26 zur Abgas-Reinigungseinrichtung 20 führt. Auch dieser Druckregler hat eine Abblasleitung 51, welche abgeblasene Luft dem Abgas a hinter der Turbine 10 zuführt. Der Druckregler 50 ermöglicht eine autonome Regelung des Drucks, mit welchem der abgezweigte Teil der verdichteten Luft l' zu der Sprüheinrichtung 22 gelangt, und kann somit zu einem stabilen Betrieb der Sprüheinrichtung 22 beitragen. Es sei bemerkt, daß die Verwendung von Abblasleitungen 41 und 51, wie dargestellt in Figur 3, keineswegs zwingend ist; die Arbeitsweise der Druckregler 40 und 50 kann in jeder möglichen Weise vorgesehen sein. In weiterer Ausgestaltung des Ausführungsbeispiels gemäß Figur 3 kann beispielsweise ein Ladeluftkühler 14, wie vorgesehen in den Ausführungsbeispielen der Figur 1 und 2, vorgesehen sein. Dieser wäre dann beispielsweise anzuordnen zwischen dem Verdichter 8 und dem Abzweig 26; eine andere Anordnung ist selbstverständlich nicht ausgeschlossen.

Die Erfindung kombiniert in besonders vorteilhafter Weise ein Abgas-Reinigungseinrichtung mit einem Verdichter zur Verdichtung zuzuführender Luft an einem Verbrennungsmotor. Sie erfordert nur geringen Aufwand, wobei sie eine wirksame Entfernung von Stickoxiden aus dem Abgas des Verbrennungsmotors gewährleistet.

## Patentansprüche

1. Verfahren zum Abbau von Stickoxiden in einem Abgas (a) eines Verbrennungsmotors (2), bei dem das Abgas (a) sowie darin mittels Druckluft (d) versprühtes Reaktionsmittel (r) einem Katalysator (21) zugeführt werden,
**dadurch gekennzeichnet,** daß der Verbrennungsmotor (2) mit von einem Verdichter (8) verdichteter Luft (l') beaufschlagt und ein Teil der verdichteten Luft vor dem Eingang in den Verbrennungsmotor (2) (l') abgezweigt und als Druckluft (d) zur Verdüsung des Reaktionsmittels (r) verwendet wird.

2. Verfahren nach Anspruch 1, bei dem der Verdichter (8) von einer mit dem Abgas (a) beaufschlagten Turbine (10) angetrieben wird.

3. Verfahren nach Anspruch 1, bei dem der Verdichter (8) von dem Verbrennungsmotor (2) direkt angetrieben wird.

4. Verfahren nach einem der vorhergehenden Ansprüche, bei dem das Reaktionsmittel (r) in dem Abgas (a) homogen verteilt wird, bevor das Abgas (a) den Katalysator (21) erreicht.

5. Verfahren nach Anspruch 4, bei dem das Reaktionsmittel (r) einen Stoff enthält, welcher nach der Einmischung des Reaktionsmittels (r) in das Abgas (a) unter Bildung von Ammoniak zersetzt wird, welches Ammoniak an dem Katalysator (21) mit den Stickoxiden zur Reaktion gebracht wird.

6. Einrichtung zum Abbau von Stickoxiden in einem Abgas (a) eines Verbrennungsmotors (2), mit einem Katalysator (21), dem das Abgas (a) sowie ein mittels Druckluft (d) in dem Abgas (a) zu versprühendes Reaktionsmittel (r) zuführbar sind sowie einer Sprüheinrichtung (22) zum Versprühen des Reaktionsmittels (r) in das Abgas,
**dadurch gekennzeichnet,** daß
a)dem Verbrennungsmotor (2) ein Verdichter (8) zur Erzeugung und Zuleitung verdichteter Luft (l') zugeordnet ist, wobei zwischen dem Verdichter (8) und dem Verbrennungsmotor (2) ein Abzweig (26) liegt, über welchen ein Teil der verdichteten Luft (l') abzweigbar ist, und
b)der Abzweig (26) mit der Sprüheinrichtung (22) verbunden ist, so daß der abgezweigte Teil der verdichteten Luft (l') als Druckluft (d) zum Versprühen des Reaktionsmittels (r) dient.

7. Einrichtung nach Anspruch 6, bei der der Abzweig (26) in einer von dem Verdichter (8) zu dem Verbrennungsmotor (2) führenden Verdichterleitung (24) direkt am Verbrennungsmotor (2) gelegen ist.

8. Einrichtung nach Anspruch 6 oder 7, bei der der Verdichter (8) zu einem Abgasturbolader (4) gehört.

9. Einrichtung nach Anspruch 6 oder 7, bei der der Verdichter (8) über einen mechanischen Antrieb (30) mit dem Verbrennungsmotor (2) verbunden ist.

10. Einrichtung nach einem der Ansprüche 6 bis 9, bei der zwischen dem Verdichter (8) und dem Verbrennungsmotor (2) ein Ladeluftkühler (14) zur Kühlung der verdichteten Luft (l') vorgesehen ist und der Abzweig (26) zwischen dem Ladeluftkühler (14) und dem Verbrennungsmotor (2) angeordnet ist.

11. Einrichtung nach einem der Ansprüche 6 bis 10, bei der der Katalysator (21) ausgebildet ist zur selektiven Katalyse einer Reaktion zwischen Stickoxiden und einem Reduktionsmittel, insbesondere Ammoniak.

## Claims

1. Method for the decomposition of nitrogen oxides in an exhaust gas (a) of an internal combustion engine (2), in which method the exhaust gas (a) and a reagent (r) which is sprayed into the latter by means of compressed air (d) are supplied to a catalytic converter (21), characterised in that air (l') compressed by a compressor (8) is applied to the internal combustion engine (2) end a portion of the compressed air (l') is branched off before the entry into the internal combustion engine (2) and is used as compressed air (d) for injecting the reagent (r).

2. Method according to claim 1, in which the compressor (8) is driven by a turbine (10) to which the exhaust gas (a) is applied.

3. Method according to claim 1, in which the compressor (8) is driven directly by the internal combustion engine (2).

4. Method according to one of the preceding claims, in which the reagent (r) is distributed homogenously in the exhaust gas (a) before the exhaust gas (a) reaches the catalytic converter (21).

5. Method according to claim 4, in which the reagent (r) contains a substance which, after mixing of the reagent (r) into the exhaust gas (a), is decomposed to form ammonia, which ammonia is caused to react at the catalytic converter (21) with the nitrogen oxides.

6. Device for the decomposition of nitrogen oxides in an exhaust gas (a) of an internal combustion engine (2), having a catalytic converter (21), to which the exhaust gas (a) and a reagent (r) to be sprayed into the exhaust gas (a) by means of compressed air (d) can be supplied, and also a spraying device (22) for spraying the reagent (r) into the exhaust gas, characterised in that
a) a compressor (8) for generating and supplying compressed air (l') is allocated to the internal combustion engine (2), with a branch (26), by way of which a portion of the compressed air (l') can be branched off, lying between the compressor (8) and the internal combustion engine (2), and
b) the branch (26) is connected to the spraying device (22) so that the branched-off portion of the compressed air (l') can be used as compressed air (d) for spraying the reagent (r).

7. Device according to claim 6, in which the branch (26) is positioned directly at the internal combustion engine (2), in a compressor line (24) which leads from the compressor (8) to the internal combustion engine (2).

8. Device according to claim 6 or 7, in which the compressor (8) belongs to an exhaust-gas turbocharger (4).

9. Device according to claim 6 or 7, in which the compressor (8) is connected to the internal combustion engine (2) by way of a mechanical drive (30).

10. Device according to one of the claims 6 to 9, in which there is provided between the compressor (8) and the internal combustion engine (2) a supercharger-air cooler (14) for cooling the compressed air (l'), and the branch (26) is arranged between the supercharger-air cooler (14) and the internal combustion engine (2).

11. Device according to one of the claims 6 to 10, in which the catalytic converter (21) is constructed for the selective catalysis of a reaction between nitrogen oxides and a reducing agent, in particular ammonia.

## Revendications

1. Procédé pour décomposer les oxydes d'azote dans des gaz d'échappement (a) d'un moteur à combustion interne (2), dans lequel les gaz d'échappement (a), ainsi qu'un réactif (r) qui y est atomisé à l'aide d'air comprimé (d), sont envoyés sur un pot catalytique (21), caractérisé en ce que le moteur à combustion interne (2) reçoit de l'air (1') comprimé par un compresseur (8), et une partie de l'air comprimé (1') est, avant de pénétrer dans le moteur à combustion interne (2), dérivée et utilisée en tant qu'air comprimé (d) pour injecter le réactif (r).

2. Procédé selon la revendication 1, dans lequel le compresseur (8) est entraîné par une turbine (10) alimentée par les gaz d'échappement (a).

3. Procédé selon la revendication 1, dans lequel le compresseur (8) est entraîné directement par le moteur à combustion interne (2).

4. Procédé selon l'une des revendications précédentes, dans lequel le réactif (r) est réparti d'une manière homogène dans les gaz d'échappement (a) avant que les gaz d'échappement (a) n'arrivent au pot catalytique (21).

5. Procédé selon la revendication 4, dans lequel le réactif (r) contient une substance qui, après que le réactif (r) a été mélangé aux gaz d'échappement (a), se décompose avec formation d'ammoniac, lequel ammoniac est, sur le pot catalytique (21), mis à réagir avec les oxydes d'azote.

6. Dispositif pour décomposer les oxydes d'azote dans des gaz d'échappement (a) d'un moteur à combustion interne (2), comportant un pot catalytique (21), sur lequel tant les gaz d'échappement (a) qu'un réactif (r), destiné à être pulvérisé dans les gaz d'échappement (a) à l'aide d'air comprimé (d), peuvent être envoyés, ainsi qu'un dispositif de pulvérisation (22) destiné à atomiser le réacteur (r) dans les gaz d'échappement, caractérisé en ce que
a) au moteur à combustion interne (2) est affecté un compresseur (8) destiné à produire et à amener de l'air comprimé (1'), une dérivation (26), par laquelle une partie de l'air comprimé (1') peut être dérivée, se trouvant entre le compresseur (8) et le moteur à combustion interne (2), et
b) la dérivation (26) est reliée au dispositif de pulvérisation (22) de façon que la partie dérivée de l'air comprimé (1') puisse servir d'air comprimé (d) pour atomiser le réactif (r).

7. Dispositif selon la revendication 6, dans lequel la dérivation (26), dans une conduite de compresseur (24) allant du compresseur (8) au moteur à combustion interne (2), est disposée directement sur le moteur à combustion interne (2).

8. Dispositif selon la revendication 6 ou 7, dans lequel le compresseur (8) appartient à un turbocompresseur à gaz d'échappement (4).

9. Dispositif selon la revendication 6 ou 7, dans lequel le compresseur (8) est relié par l'intermédiaire d'un entraînement mécanique (30) au moteur à combustion interne (2).

10. Dispositif selon l'une des revendications 6 à 9, dans lequel, entre le compresseur (8) et le moteur à combustion interne (2), on prévoit un refroidisseur de l'air de refroidissement (14), destiné à refroidir l'air comprimé (1'), la dérivation (26) étant disposée entre le refroidisseur d'air de suralimentation (14) et le moteur à combustion interne (2).

11. Dispositif selon l'une des revendications 6 à 10, dans lequel le pot catalytique (21) est constitué pour la catalyse sélective d'une réaction entre des oxydes d'azote et un réducteur, en particulier l'ammoniac.
